# EUROPEAN PATENT SPECIFICATION

(11) **EP 4 151 877 B1**
(45) Date of publication and mention of the grant of the patent: **28.05.2025**
(21) Application number: 22193942.4
(22) Date of filing: 05.09.2022
(51) Int. Cl.: F16D 49/00, F16D 65/00

(54) **GUIDE PIN, GUIDE SLEEVE, GUIDE, MAINTENANCE KIT, BRAKE CALIPER, ASSEMBLY METHOD**
FÜHRUNGSSTIFT, FÜHRUNGSHÜLSE, FÜHRUNG, WARTUNGSSATZ, BREMSSATTEL, MONTAGEVERFAHREN
AXE DE GUIDAGE, MANCHON DE GUIDAGE, GUIDE, KIT D'ENTRETIEN, ÉTRIER DE FREIN, MÉTHODE DE MONTAGE

(30) Priority: 08.09.2021 IT 202100023180
(43) Date of publication of application: 22.03.2023
(73) Proprietor: Brembo S.p.A., 24035 Curno (Bergamo) (IT)
(72) Inventor: BOSIS, Alberto, I-24035 CURNO, BERGAMO (IT)
(74) Representative: Crippa, Paolo Ernesto

(56) References cited:
- WO-A1-2013/121358
- JP-A- 2007 010 056

## Description

### . Field of the invention

**.** The present invention refers to a guide pin, as well as to a guide sleeve, as well as to a guide for a brake caliper of the floating type, as well as to a maintenance kit for a brake caliper of the floating type, as well as to a brake caliper of the floating type, as well as to an assembly method for a brake caliper of the floating type.

### . Prior art

**.** In a disc brake of the floating brake caliper type, the brake caliper comprises a support structure or bracket, adapted to be mounted on a fixed portion of the vehicle and generally arranged to straddle the outer peripheral edge of a brake disc, adapted for rotating around a rotation axis (X-X) defining an axial direction (A-A), and a caliper body mounted in a sliding manner on the support structure by means of special guides. The sliding movement (floating) of the brake caliper (in installed condition) is parallel to the rotation axis of the brake disc (XX) along the axial direction (A-A). In addition, in a disc brake a radial direction (R-R) is defined, substantially orthogonal to said axial direction (A-A).

**.** Generally, the caliper body (i.e the floating structure) comprises a lateral portion, arranged externally to the support structure (generally on the hub side of the braking system), and a cantilevered portion, extending from the lateral portion in axial direction (towards the wheel side) on the support structure.

**.** As known, disc brake discs comprise a bell adapted to associate the disc with a hub of a vehicle, from which an annular portion, referred to as a braking band, extends, which is intended to cooperate with brake pads of a caliper.

**.** The brake caliper carries two braking pads, associated in a sliding manner by at least one pin, arranged inside a housing formed in the support structure so that they can come into contact with the braking surfaces of the disc. A first brake pad, or active brake pad, is pushed against the disc directly by thrust means, or pistons, housed in the lateral portion of the caliper body. A second brake pad, or reaction brake pad, opposed to the first brake pad, is pushed against the disc by the cantilevered portion of the caliper body during the sliding of the caliper body with respect to the support structure or bracket following the reaction resulting from the interaction between the first pad and the disc.

**.** Generally, the floating-type brake caliper guides each comprise a guide pin and a guide sleeve configured to be arranged between the caliper body and the bracket.

**.** Usually, the guide pin is fixed to the bracket by means of a coupling portion insertable into a fixing housing made in the bracket, and it comprises a pin sliding portion adapted for sliding inside a sliding housing made in the caliper body and at least partially internally to the guide sleeve.

**.** According to a known embodiment, the coupling portion of the guide pin comprises a screw with an abutment head adapted to abut the caliper body, and a guide pin shank internally comprising a threaded housing adapted to connect with the screw and having a respective abutment head adapted to abut the caliper body on the opposite side with respect to the abutment head of the screw. In this way, by connecting the screw with the pin shank with the respective abutment heads abutting the caliper body, it is possible to make a connection between the guide pin and the caliper body. Solutions of this type are known from KR20020014209 and KR20100055082**.**

**.** According to a further known embodiment, the coupling portion of the pin is threaded, and the fixing housing of the caliper body is threaded, so as to make a threaded coupling between the guide pin and the caliper body. A solution of this type is illustrated by JP2007010056**.**

WO 2013/121358 A1 can be also cited as prior art.

**.** According to a known embodiment, the guide sleeve is fixedly connectable from one end to the guide pin and from the other end to the sliding housing, through a first annular lip and a second annular lip, respectively, which project from the sleeve body in radial direction. The first annular lip projects internally radially towards the guide pin and is configured to be received in a pin groove made on the guide pin so as to form an undercut fit between the guide pin and the guide sleeve. The second annular lip projects externally radially towards the bracket and is configured to be received in a bracket groove made in the sliding housing so as to form an undercut fit between the bracket and the guide sleeve. In this way, the guide sleeve, being made of elastomeric material, allows a reversible fit with the guide pin and the bracket, and allows to make a tight fit with the guide pin and with the bracket, protecting on the one hand the guide pin from corrosive phenomena and preventing dust particles, or liquid, of the external environment to come into contact with the guide pin and/or to access the sliding housing.

**.** Although the guides of known type meet the need to protect the guide pin and the sliding housing from solid or liquid particles of the external environment, it was found that the undercut fit between guide pin and guide sleeve makes known-type guides disadvantageous.

**.** According to a disadvantageous aspect, to make a guide pin of known type, a turning step of the guide pin so as to form the groove to fix the guide sleeve to the guide pin is required, thus increasing the production costs of the guide pin.

**.** According to a further disadvantageous aspect, in the maintenance operations for the brake caliper and/or in the assembly and/or replacement operations for known-type guides, the fixing step the guide sleeve to the guide pin is separate from the fixing step the guide pin to the bracket, making it necessary to have expert manual skills of a user and increasing the probability of assembly errors, as well as increasing the time required for maintenance.

**.** Further, in case of advanced wear of the guide sleeve, the undercut connection, although maintaining the connection between guide sleeve and guide pin, could lose its seal and allow liquids to pass through (water) from the outside, favoring the onset of corrosive phenomena for the guide pin compromising the efficiency and operation of the braking system, making frequent visual inspections of the brake caliper necessary to evaluate its functionality.

**.** The need is therefore felt in the sector to realize solutions of floating-type brake caliper guides which involve a reduced number of processing steps, by decreasing production costs and the selling price, and that they are simple to make, while ensuring a tight connection of guide sleeve to the guide pin that is safe and long-lasting, as well as making it possible to simplify and reduce the times of the assembly and maintenance steps for the floating-type brake calipers.

**.** Therefore, the problem underlying the present invention is that of devising a guide pin, as well as a guide sleeve, as well as a guide, as well as a maintenance kit, as well as a brake caliper, which have structural and functional characteristics such as to satisfy the aforementioned needs and to obviate, at the same time, the drawbacks mentioned with reference to the known art and to satisfy the aforementioned felt needs.

### . Solution

**.** The present invention aims to provide a guide for floating type brake calipers that allows a simple, safe and durable connection of a guide pin to a guide sleeve, which allows at the same time to reduce the production costs of the guide itself and simplify the maintenance, assembly or disassembly operations of the brake caliper.

**.** This and other purposes and advantages are achieved with a guide pin according to claim **1,** as well as a guide according to claim 4, as well as a maintenance kit according to claim 11, as well as a brake caliper according to claim 12, as well as an assembly method of a brake caliper according to claim 13.

**.** Some advantageous embodiments are the object of the dependent claims.

**.** Thanks to the proposed solutions, it is possible to ensure a coupling between the guide pin and the guide sleeve, avoiding making grooves on the guide pin through turning steps, thus reducing the time required for making the guide pin, as well as production costs.

**.** Thanks to the proposed solutions, it is possible to make a thread coupling between the guide pin and the guide sleeve, which allows a simple and safe connection between the two guiding components, reducing the possibility of incorrect coupling with respect to known solutions, as well as simplifying the assembly and disassembly steps of the guide placed between the bracket and the caliper body of the brake caliper.

**.** Thanks to the proposed solutions, it is possible to provide a guide for floating calipers, with superior protection of the guide pin compared to known solutions. Indeed, thanks to the thread coupling between the guide pin and the guide sleeve, it is possible to have a first sealing portion, as well as thanks to the realization of sealing lips made on the sleeve, it is possible to make a safe seal with the bracket and with a sealing surface of pin downstream of the thread that connects the guide pin to the guide sleeve.

**.** Thanks to the proposed solutions, the coupling between the guide pin and the guide sleeve occurs at least partially concurrently with the coupling between the guide pin and the bracket or the caliper body, in a same step.

### . Drawings

**.** Additional features and advantages of the guide pin, as well as of guide sleeve, as well as of the guide, as well as of the brake caliper will appear from the following description of their preferred embodiment examples, given for indicative and non-limiting purposes, with reference to the attached figures in which:
- Figure 1 represents, in axonometry, a guide pin comprising a threaded first pin coupling portion, or main guide pin, according to an embodiment of the present invention;
- Figure 2 represents, in side view, the guide pin of Figure 1;
- Figure 3 represents, in front view perpendicular to the of guide pin axis, a section of the pin sliding portion;
- Figure 4 represents, in axonometry, a guide pin comprising a threaded first pin coupling portion, or secondary guide pin, according to an embodiment of the present invention;
- Figure 5 represents, in side view, the guide pin of Figure 4;
- Figure 6 represents, in axonometry, a guide sleeve according to the present invention, in which a second sleeve coupling portion is visible that protrudes externally radially, and a sleeve contact portion is visible having, internally, longitudinal grooves to reduce the contact area between the guide sleeve and a pin sliding portion;
- Figure 7 represents, in axonometry, the guide sleeve of Figure 6, from a diametrically opposite view, in which a first sleeve coupling portion is visible, internally threaded to couple with the first pin coupling portion, and a bellows sleeve central portion in extended configuration;
- Figure 8 represents, in axonometry view, the guide sleeve of Figure 6, in which the bellows sleeve central portion is in retracted configuration;

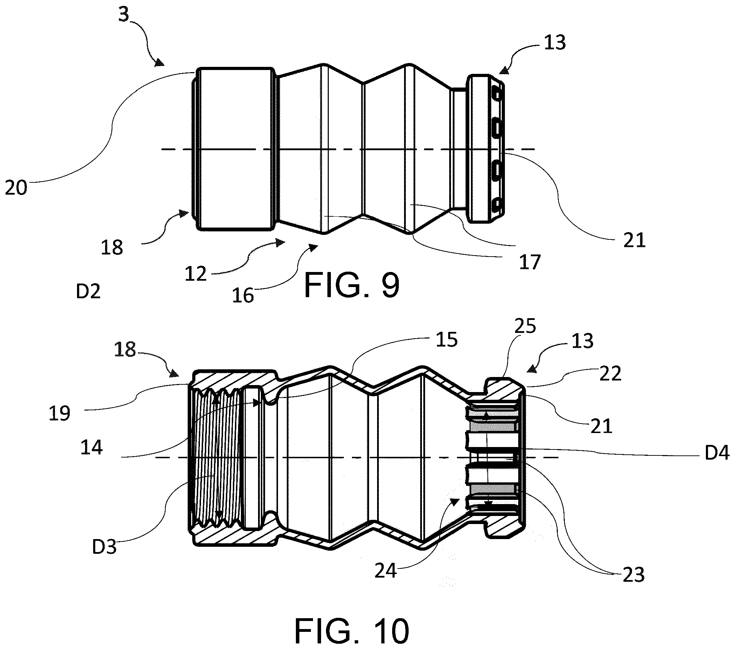

- Figure 9 represents the guide sleeve of Figure 6 in side view;
- Figure 10 represents the guide sleeve of Figure 8 in partially sectioned view with respect to a symmetry axis of the guide sleeve;

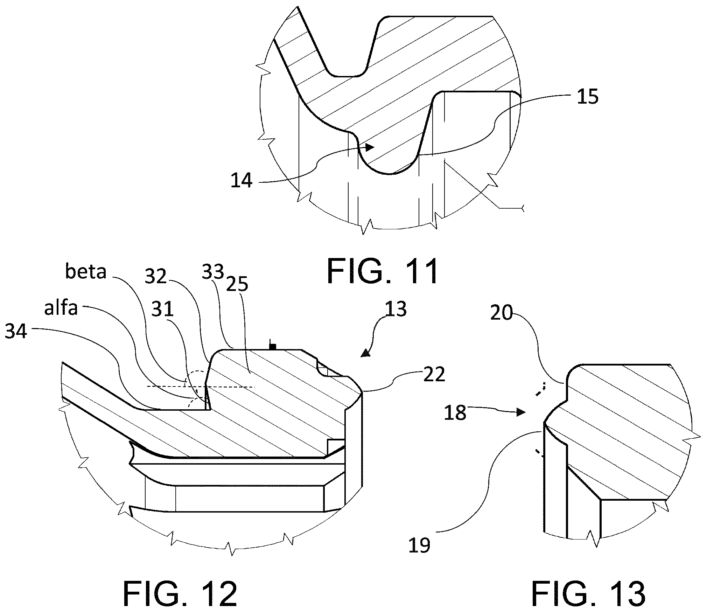

- Figure 11 illustrates an enlarged detail of the Figure 10, in which a first sleeve sealing portion is visible which projects radially internally from the sleeve body to provide a 360 degree seal with the body of the pin;
- Figure 12 illustrates an enlarged detail of the Figure 10, in which a second sleeve coupling portion is shown which projects externally radially from the sleeve body to be received in a radial fixing groove formed in the sliding housing in the caliper body or in the bracket so as to make a undercut fit between the guide sleeve and the caliper body or the bracket, and in which a sleeve fixing lip is shown which projects externally along the axial direction from the second coupling portion that is inserted into an appropriate axial groove made in the radial fixing groove;
- Figure 13 illustrates an enlarged detail of the Figure 10, in which a second sleeve sealing portion is shown projecting from the sleeve body externally along the axial direction so as to provide a 360 ° seal between the sleeve and the bracket or the caliper body;

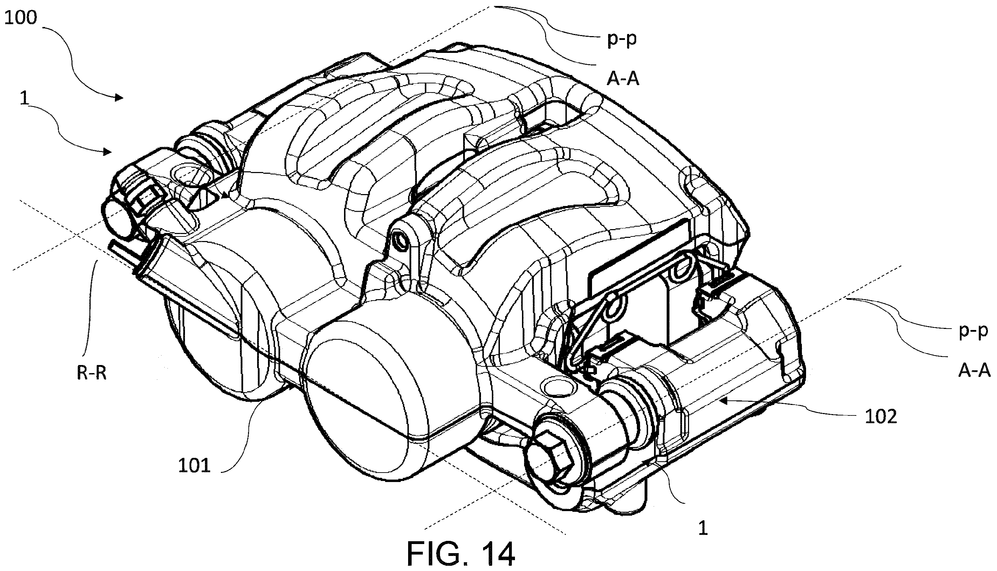

- Figure 14 illustrates, in axonometric view, a brake caliper, according to the present invention, comprising a caliper body mechanically connected, in relative sliding, to a bracket by means of at least one guide according to the present invention;

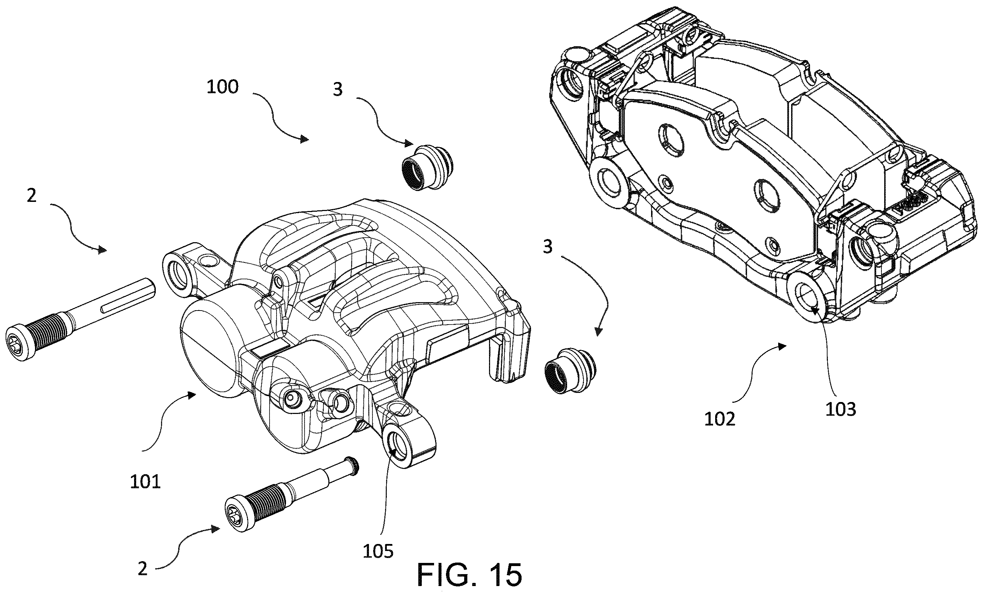

- Figure 15 illustrates, in axonometric view, an exploded view of the brake caliper of Figure 14, in which the caliper body, two guides according to the present invention disassembled in respective guide pins and respective guide sleeves, and the bracket comprising respective housing pockets for two opposite braking pads, are shown;

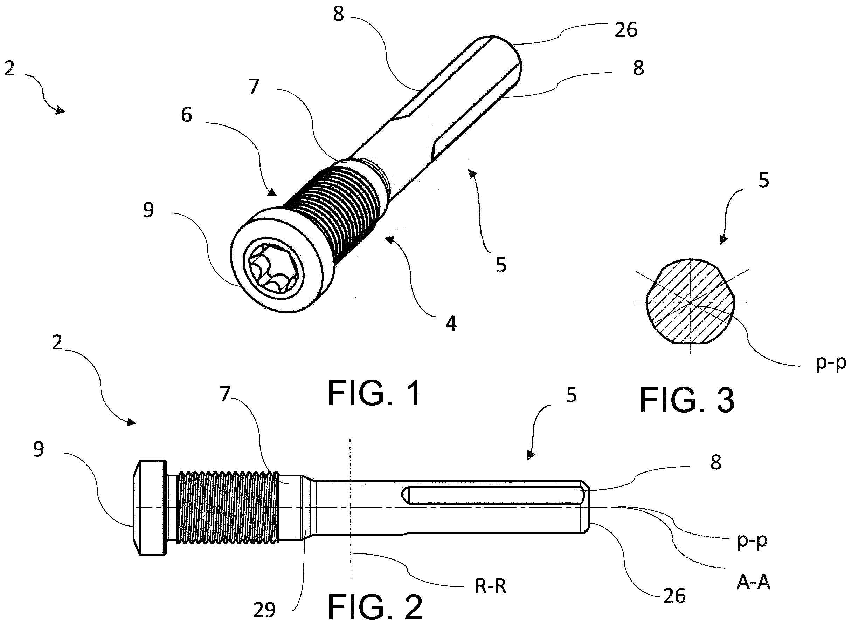

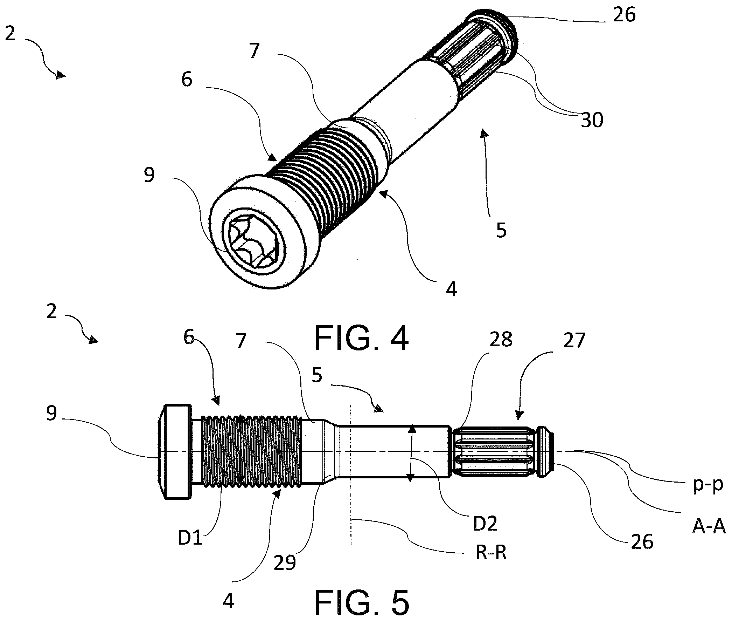

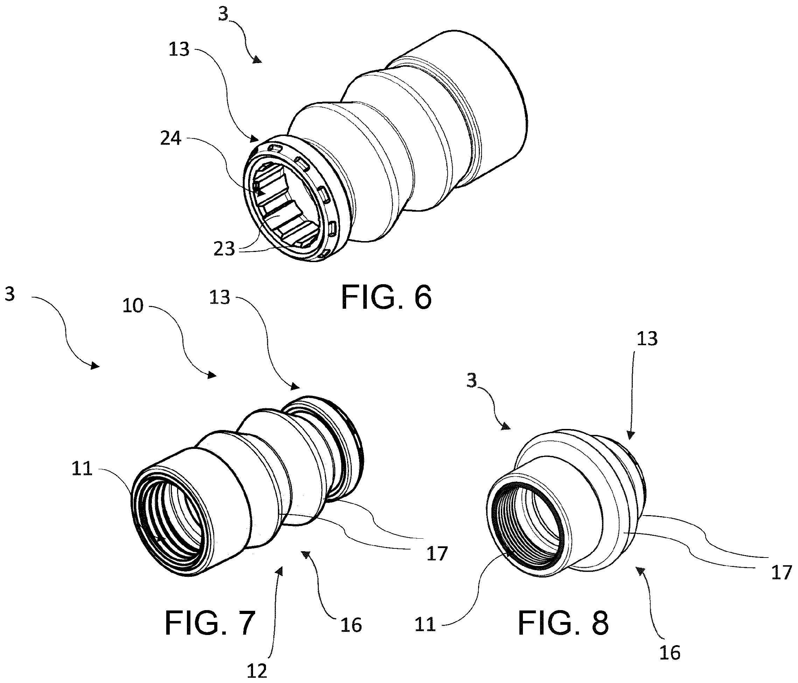

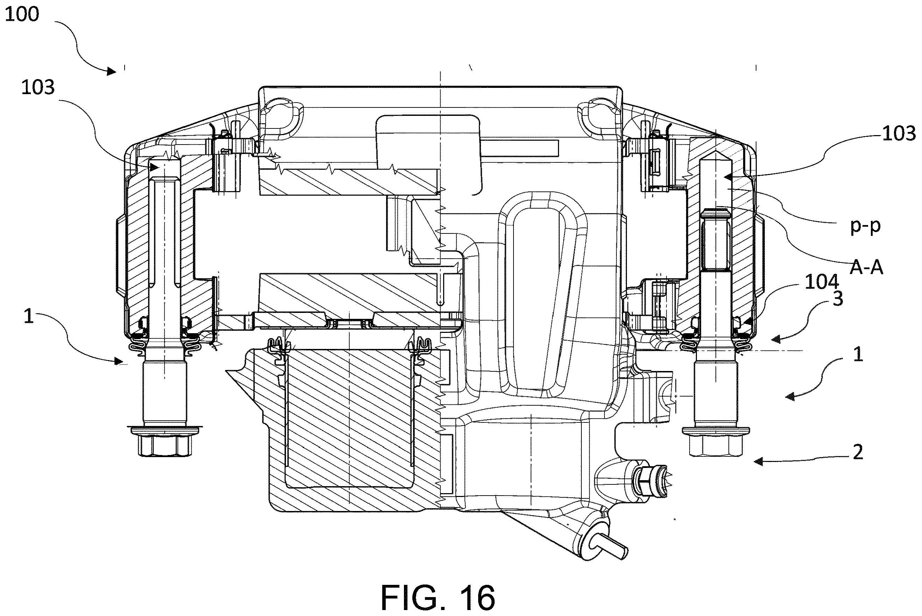

- Figure 16 illustrates, in a partially sectioned view along a plane passing through the respective symmetry axes of the two guides, the guide pin, or primary guide pin, according to Figure 1, sliding in a respective primary sliding housing formed in the bracket, in which the primary guide pin is fixed to the caliper body and fixed to Figure 6 sleeve, in turn fixed to the bracket of the brake caliper, as well as the guide pin, or secondary guide pin, according to Figure 4, sliding in a respective secondary sliding housing formed in the bracket, in which the secondary guide pin is fixed to the caliper body and fixed to Figure 6 sleeve, in turn fixed to the bracket;

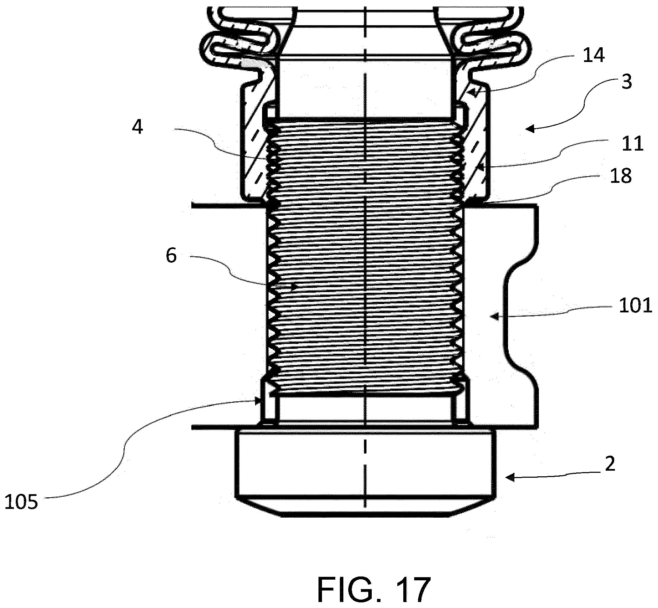

- Figure 17 illustrates a detail of the section in the Figure 16, in which Figure 11 first sleeve sealing portion is visible in sealing contact with the guide pin, as well as Figure 13 second sleeve sealing portion is visible, in the form of a sleeve sealing lip in sealing contact with the caliper body.

### . Description of some preferred embodiments

**.** In accordance with a general embodiment, reference number 2 indicates a guide pin for a brake caliper 100 of the floating type, in which said brake caliper 100 comprises a caliper body 101 and a bracket 102, mechanically connectable in sliding relationship.

**.** Said guide pin 2 is configured to be placed between said caliper body 101 and said bracket 102 to allow a relative sliding between the caliper body 101 and the bracket 102 along an axial direction A-A.

**.** Said guide pin 2 is configured to connect to a guide sleeve 3 and slide at least partially within said guide sleeve 3.

**.** Said guide pin 2 comprises at least a first pin coupling portion 4, a second pin coupling portion 6, and a pin sliding portion 5. Said first pin coupling portion 4 is arranged between said second pin coupling portion 6 and said pin sliding portion 5.

**.** Said first pin coupling portion 4 is configured to couple said guide pin 2 to said guide sleeve 3.

**.** Said pin sliding portion 5 is configured to guide in a sliding manner said guide pin 2 in a sliding housing 103 formed in said caliper body 101 or said bracket 102.

**.** Said second pin coupling portion 6 is configured to couple said guide pin 2 to either said bracket 102 or said caliper body 101.

**.** Advantageously, said first pin coupling portion 4 is threaded to form a threaded coupling between said guide pin 2 and said guide sleeve 3.

**.** Thanks to the provision of the threaded first pin coupling portion it is possible to allow a simple, quick and safe connection between the guide pin and the guide sleeve.

**.** Thanks to the provision of the threaded first pin coupling portion, it is possible to make the guide pin without providing an annular groove in the pin body to make an undercut coupling with a coupling lip of the guide sleeve.

**.** In accordance with an embodiment, said guide pin 2 comprises a pin sealing portion 7 configured to tightly connect with said guide sleeve 3. In accordance with an embodiment, said pin sealing portion 7 is a smooth and scratch-free portion, in which said pin sealing portion 7 is placed between said first pin coupling portion 4 and said pin sliding portion 5. In this way, it is possible to realize a tight connection insulating the threaded first pin coupling portion from the pin sliding portion.

**.** In accordance with an embodiment, said guide pin 2 is configured to be inserted into a fixing housing 105 made in said bracket 103 or in said caliper body 102. In accordance with an embodiment, said fixing housing 105 is coaxial and opposite to said sliding housing 103.

**.** In the solutions shown, said fixing housing 105 being a housing passing through a thickness of the caliper body 102, and said sliding housing 103 being blind housing formed in the bracket 103.

**.** In accordance with an embodiment, said second pin coupling portion 6 is threaded to form a threaded coupling with a threaded portion of said fixing housing 105.

**.** In accordance with an embodiment, said first pin coupling portion 4 and said second pin coupling portion 6 form a seamless pin threaded portion.

**.** In accordance with an embodiment, when said guide pin 2 is coupled to said caliper body 102 with said second coupling portion 6, said first coupling portion 5 is external to said coupling housing 105.

**.** In accordance with an embodiment, said guide pin 2 is configured to couple to said guide sleeve 3 avoiding realizing on said guide pin 2 grooves to connect said guide pin 2 to said guide sleeve 3 in an undercut manner.

**.** In accordance with an embodiment, said guide pin 2 develops along a pin axis parallel to said axial direction A-A.

**.** In accordance with an embodiment, said guide pin 2 is axially symmetrical with respect to said pin axis.

**.** In accordance with an embodiment, said guide pin 2 is symmetrical with respect to at least one symmetry plane passing through said pin axis.

**.** In accordance with an embodiment, said guide pin 2 comprises a pin head 9 configured to abut said caliper body 102 or said bracket 103 when said second pin coupling portion 6 is fully coupled to said caliper body 102 or said bracket 103. In accordance with an embodiment, said guide pin 2 comprises a pin tip 26, diametrically opposite to said pin head 9.

**.** In accordance with an embodiment, said first coupling portion 4 and said second pin coupling portion 6 substantially have the same diameter, in which said pin sliding portion 5 is tapered compared to the first coupling portion 4. In accordance with an embodiment, said pin sliding portion 5 is stepped tapered with respect to said sliding portion 5 and/or with respect to said pin sealing portion. In accordance with an embodiment, said sliding portion 5 is substantially cylindrical and is jointed to said first pin coupling portion 4 or to said pin sealing portion with a pin tapered portion. In accordance with an embodiment, said pin sliding portion 5 has a second pin diameter D2, smaller than said first pin diameter D3.

**.** In accordance with an embodiment, said pin tapered portion is a truncated cone portion so that said first sleeve coupling portion gradually widens until it takes the diameter of the first pin coupling portion.

**.** In accordance with an embodiment, said pin sliding portion 5 comprises at least one longitudinal groove 8 which extends from said pin tip 26 towards said first pin coupling portion 4, allowing air to be vented from the sliding housing 103 during an assembly operation of the brake caliper 100.

**.** In accordance with an embodiment, said pin sliding portion 5 is a cylindrical portion of pin and said at least one groove forms recessed flat surfaces in said pin cylindrical portion.

**.** In accordance with an embodiment, said at least one axial groove 8 comprises angularly offset axial grooves 8 in odd number.

**.** In accordance with an embodiment, said at least one axial groove 8 comprises three axial grooves 8, each one offset by an angle of 120°, +- 5°.

**.** In accordance with an embodiment, said pin sliding portion 5 has an pin annular housing, delimited by at least said pin tip. In accordance with an embodiment, said pin annular housing is configured to house a damping anti-shock bushing 27.

**.** In accordance with an embodiment, said bushing is made of elastomeric material and comprises a plurality of axial recesses 30 adapted to retain a lubricant to allow a low friction sliding of the guide pin 2 in the sliding housing 103, and to reduce the contact surface between the guide pin 2 and the walls of the sliding housing 103.

**.** In accordance with an embodiment, said guide pin 2 is made of steel.

**.** In accordance with an embodiment, said guide pin 2 is made in one piece by molding. In accordance with an embodiment, said pin head 9 is made in one piece with said first pin coupling portion 4. In accordance with an embodiment, said guide pin 2 has no internal threaded holes.

**.** The present invention also relates to a guide sleeve 3 for a floating caliper 101 of a disc brake. Said guide sleeve 3 is configured to couple to a guide pin 2 according to any one of the previously described embodiments.

**.** Said guide sleeve 3 is configured to be placed between said caliper body 101 and said bracket 102.

. Said guide sleeve 3 comprises a tubular sleeve body 10 configured to at least partially accommodate in a sliding manner a pin sliding portion 5 of a guide pin 2 guided in a sliding manner within a sliding housing 103 formed in said bracket 101 or in said caliper body 102 to allow a relative sliding between said caliper body 101 and said bracket 102 along an axial direction A-A. In accordance with an embodiment, said guide sleeve has a central hole passing along the axial direction A-A.

**.** Said guide sleeve 3 is configured to deform to allow, without interfering, the relative sliding between the caliper body 101 and the bracket 102.

**.** Said guide sleeve 3 comprises at least a first sleeve coupling portion 11, a sleeve sliding portion 12, a second sleeve coupling portion 13.

**.** Said first sleeve coupling portion 11 is configured to connect said guide sleeve 3 to said guide pin 2.

**.** Said sleeve sliding portion 12 is configured to internally receive at least one portion of said pin sliding portion 5.

**.** Said second sleeve coupling portion 13 configured to be inserted into said sliding housing 103 and couple said guide sleeve 3 to said caliper body 101 or said bracket 102. Said sleeve sliding portion 12 comprising said second sleeve coupling portion 13.

**.** Advantageously, said first sleeve coupling portion 11 is threaded to form a threaded coupling between said guide sleeve 3 and said guide pin 2.

**.** In accordance with an embodiment, said guide sleeve 3 comprises a first sleeve sealing portion 14 which projects radially internally along a radial direction R-R perpendicular to said axial direction A-A towards said guide pin 2 so as to seal with a pin sealing portion 7 of said pin comprising a smooth, scratch-free surface. In accordance with an embodiment, said first sleeve sealing portion 14 is annular.

**.** In accordance with an embodiment, said sleeve sliding portion 12 comprises a sleeve central portion 16 elastically reversible between an extended configuration and a retracted configuration.

**.** In accordance with an embodiment, said sleeve central portion 16 is arranged between said first sleeve coupling portion 11 and said second sleeve coupling portion 13.

**.** In accordance with an embodiment, said sleeve central portion 16 is adapted for allowing contactless sliding of said pin sliding portion 5 both in said retracted configuration and in said extended configuration.

**.** In accordance with an embodiment, said sleeve body 10 extends between a first axial sleeve edge 20 and a second axial sleeve edge 21, wherein said first axial sleeve edge 20 defines said sleeve body 10 on the opposite side with respect to said second sleeve coupling portion 13.

**.** In accordance with an embodiment, said guide sleeve 3 comprises a second sleeve sealing portion which projects in axial direction A-A from said first axial sleeve edge 20 to make a seal with the caliper body 102 or with the bracket 103 so as to protect said guide pin 2 from corrosive phenomena.

**.** In accordance with an embodiment, said sleeve sliding portion 11 comprises a sleeve contact portion 24 which develops internally with respect to said second sleeve coupling portion 13 and configured to contact in a sliding relationship said pin sliding portion 5.

**.** In accordance with an embodiment, said sleeve contact portion 24 has a plurality of sleeve axial grooves 23 so as to reduce the contact area between said guide sleeve 3 and said guide pin 2 and so as to create air evacuation channels between the pin sliding portion 5 and the sleeve contact portion 24 which allow to evacuate air from the sliding housing 103. In accordance with an embodiment, said contact portion has a second sleeve diameter D4, in which said second sleeve diameter D4 is substantially equal to said second pin diameter D2.

**.** In accordance with an embodiment, said guide sleeve 3 is made of an elastomeric material compatible with a brake fluid and/or with a lubricant for the guide components, e.g. grease.

**.** In accordance with an embodiment, said elastomeric material comprises rubber. In accordance with an embodiment, said rubber is EPFM rubber or a silicone material.

**.** In accordance with an embodiment, said second sleeve coupling portion 13 protrudes radially outwardly from said sleeve body 10 to form an undercut connection with an annular fixing groove 105, made radially within said sliding housing 103.

**.** In accordance with an embodiment, said first sleeve sealing portion 14 comprises a sleeve sealing tooth 15 that forms a first gasket integrated into said sleeve body 10. In accordance with an embodiment, said first gasket is an o-ring or a v-ring.

**.** In accordance with an embodiment, said first axial sleeve edge 20 is an annular edge substantially perpendicular to said axial direction A-A. Said second sleeve sealing portion 18 comprises a sleeve sealing lip 19 that projects from said first axial sleeve edge 20 in axial direction A-A thus forming a cusp.

**.** In accordance with an embodiment, said second sleeve sealing portion 18 forms a second gasket integrated into said sleeve body 10. In accordance with an embodiment, said sleeve sealing lip 19 is annular. In accordance with an embodiment, said second integrated gasket is a v-ring.

**.** In accordance with an embodiment, said second sleeve coupling portion 13 is axially delimited by said second axial sleeve edge 21.

**.** In accordance with an embodiment, said second sleeve coupling portion 13 comprises a sleeve fixing tooth 25 that develops mainly long said radial direction R-R with respect to a sleeve cylindrical portion 34 having parallel development with respect to said axial direction A-A.

**.** In accordance with an embodiment, in a section passing through a plane comprising said axial direction A-A and a radial direction R-R perpendicular to it, said sleeve fixing tooth 25 forms in a root portion 31 an acute angle alpha with said sleeve cylindrical portion. In accordance with an embodiment, said acute angle alpha is between 90 and 70 degrees. In accordance with an embodiment, in a section passing through a plane comprising said axial direction A-A and a radial direction R-R perpendicular to it, said sleeve fixing tooth 25 comprises a lateral portion 32 which develops from said root portion 31 with an obtuse angle beta with respect to said axial direction A-A, until reaching a substantially cylindrical apical portion 33 with parallel development with respect to said axial direction A-A. According to an embodiment, said obtuse angle beta is comprised between 90 and 110 degrees.

**.** In accordance with an embodiment, said sleeve fixing tooth 25, through said root portion 31 and said lateral portion 32 forming a tooth wedge portion, wedges against a respective wedge-shaped portion of the annular fixing groove 104 made radially in the sliding housing 103 formed in the bracket 102.

**.** In accordance with an embodiment, said second sleeve coupling portion 13 comprises a sleeve fixing lip 22 that develops mainly along the axial direction A-A, in which said sleeve fixing lip 22 in a section with respect to a plane comprising said axial direction and said radial direction is substantially perpendicular to said sleeve fixing tooth 25.

**.** In accordance with an embodiment, said sleeve fixing lip 22 is configured to be inserted into an annular housing made on an axially internal surface of said fixing groove 104, so as to form a tight fit of said second sleeve coupling portion 13 and said bracket 103. In accordance with an embodiment, said sleeve fixing lip 22 is configured to elastically urge said sleeve fixing tooth 25 against an opposite axially outer surface of said fixing groove 104, preferably wedge-shaped.

**.** In accordance with an embodiment, said sleeve central portion 16 is folded into a bellows. In accordance with an embodiment, said central portion 16 comprises at least one bellows fold 17 extending into radial direction R-R allowing a reversible elongation of said guide sleeve 3 between the retracted configuration and the extended configuration. In accordance with an embodiment, said at least one bellows fold 17 comprises two bellows folds.

**.** The present invention also relates to a guide 1 for a brake caliper 100 of the floating type for a disc brake.

**.** Said guide 1 comprises a guide pin 2 according to one of the previously described embodiments, and a guide sleeve 3 according to one of the previous embodiments described, in which the guide pin 2 and the guide sleeve 3 are reversibly couplable with a threaded coupling.

. In accordance with an embodiment, said first pin coupling portion 4 has a first pin diameter D1, and in which said first sleeve coupling portion 11 has a first sleeve diameter D3, wherein said first sleeve diameter D3 is smaller than said first pin diameter D1 so that said first sleeve coupling portion 11 is elastically biased against said first pin coupling portion 4 forming a threaded fit as tight as possible between said guide pin 2 and said guide sleeve 3. In accordance with an embodiment, said first pin diameter D1 is an M16 thread diameter. In accordance with an embodiment, said first sleeve diameter D3 is an M14 diameter. In accordance with an embodiment, thanks to the provision of the guide sleeve of elastic material, a threaded connection is possible between the first pin diameter D1 greater than the first sleeve diameter D3, ensuring an elastically tightened threaded coupling.

**.** The present invention also relates to a maintenance kit for a brake caliper 100 of the floating type.

**.** Said maintenance kit comprises two guide pins 2 according to one of the previously described embodiments, and two guide sleeves 3 according to one of the previously described embodiments. In accordance with an embodiment, said two guide pins 2 are: a main guide pin comprising said at least one axial pin groove and a secondary guide pin comprising said at least one annular pin housing where said damping anti-shock bushing is housed.

**.** The present invention also relates to a brake caliper 100 of the floating type comprising a caliper body 101 mechanically connected to a bracket 102 in a sliding manner by means of at least one guide 1 according to any one of the previously described embodiments, in which said at least one guide 1 is interposed between said caliper body 101 and said bracket 102.

**.** In accordance with an embodiment, at least one sliding housing 103 is formed in said bracket 102, so that said guide pin 1 is sliding in said bracket 102. In accordance with an embodiment, at least one fixing housing is formed in said caliper body 102, so that said guide pin 1 is couplable to said caliper body 102. In accordance with an embodiment, said fixing housing is threaded to connect by a threaded connection with said second pin coupling portion. In accordance with an embodiment, said guide sleeve is coupled to said sliding housing, in particular in an annular fixing housing in which said second sleeve coupling portion is inserted. In accordance with an embodiment, said annular fixing housing has, in a section along a plane comprising said axial direction A-A and a radial direction R-R perpendicular to it, a complementary profile with respect to said second sleeve coupling portion 13, as previously described.

**.** In accordance with an embodiment, said bracket 103 is adapted to be mounted on a fixed portion of a vehicle. In accordance with an embodiment said brake caliper 100 comprises a first pad and a second pad housed in respective housings formed on said bracket.

**.** The present invention also relates to an assembly method for a brake caliper 100 of the floating type.

**.** The method comprises the following steps:
- providing a caliper body 101 and a bracket 102, in which the caliper body 101 is mechanically connectible in a sliding manner to the bracket 102. In accordance with an operating mode, said caliper body 101 and said bracket 102 are in accordance with one of the previously described embodiments.

**.** The method comprises the following steps:
- providing a guide pin 2 according to any one of the previously described embodiments;
- providing a guide sleeve 3 according to any one of the previously described embodiments;
- coupling said second sleeve coupling portion 13 to said sliding housing 103 made in said caliper body 101 or said bracket 102;
- approaching the caliper body 101 to said guide sleeve 3 compressing it;
- inserting said guide pin 2 in a fixing housing 105 made in said caliper body 101 or in said bracket 102, in said guide sleeve 3 and in said sliding housing 103, in which said fixing housing 105 is coaxial to said sliding housing 103. In accordance with an operating mode, the method comprises the step of lubricating said pin sliding portion 5 before the inserting step.

**.** The method comprises the step of:
- screwing said guide pin 2 coupling said first pin coupling portion 4 to said first sleeve coupling portion 11 and said second pin coupling portion 4 to said fixing housing 105.

### LIST OF REFERENCE SIGNS

- 1: guide
- 2: guide pin
- 3: guide sleeve
- 4: first pin coupling portion
- 5: pin sliding portion
- 6: second pin coupling portion
- 7: pin sealing portion
- 8: pin longitudinal grooves
- 9: pin head
- 10: tubular sleeve body
- 11: first sleeve coupling portion
- 12: sleeve sliding portion
- 13: second sleeve coupling portion
- 14: first sleeve sealing portion
- 15: sleeve sealing tooth
- 16: sleeve central portion
- 17: sleeve bellows fold
- 18: second sleeve sealing portion
- 19: sleeve sealing lip
- 20: first axial sleeve edge
- 21: second axial sleeve edge
- 22: sleeve fixing lip
- 23: sleeve longitudinal grooves
- 24: sleeve contact portion
- 25: sleeve fixing tooth
- 26: pin tip
- 27: damping anti-shock bushing
- 28: pin groove
- 29: pin tapered portion
- 30: axial recesses
- 31: tooth root portion
- 32: tooth lateral portion
- 33: tooth top portion
- 34: sleeve cylindrical portion

- 100: brake caliper
- 101: caliper body
- 102: bracket
- 103: sliding housing
- 104: fixing groove
- 105: fixing housing

- D1: first pin diameter
- D2: second pin diameter
- D3: first sleeve diameter
- D4: second sleeve diameter

- A-A: axial direction
- R-R: radial direction
- p-p: pin axis

## Claims

1. A guide pin (2) for a brake caliper (100) of the floating type of a disc brake, wherein said brake caliper (100) comprises a caliper body (101) and a bracket (102), wherein said guide pin (2) is configured to be arranged between said caliper body (101) and said bracket (102) to allow the relative sliding between said caliper body (101) and said bracket (102) along an axial direction (A-A), and wherein said guide pin (2) is configured to connect to a guide sleeve (3) and slide at least partially within said guide sleeve (3), wherein said guide pin (2) comprises:
- a first pin coupling portion (4) configured to couple said guide pin (2) to said guide sleeve (3);
- a pin sliding portion (5) configured to guide in a sliding manner said guide pin (2) into a sliding housing (103) obtained in either said caliper body (101) or said bracket (102);
- a second pin coupling portion (6) configured to couple said guide pin (2) to either said bracket (102) or said caliper body (101), wherein said first pin coupling portion (4) is arranged between said second pin coupling portion (6) and said pin sliding portion (5),
**characterized in that**
said first pin coupling portion (4) is threaded to form a threaded coupling between said guide pin (2) and said guide sleeve (3),
and wherein said guide pin (2) is configured to couple with said guide sleeve (3) avoiding making grooves on said guide pin (2) to connect said guide pin (2) with said guide sleeve (3) in an undercut manner.

2. A guide pin (2) according to the preceding claim, comprising a pin sealing portion (7) configured to connect tightly with said guide sleeve (3), wherein said pin sealing portion (7) is a smooth, ridge-free portion, wherein said pin sealing portion (7) is arranged between said first pin coupling portion (4) and said pin sliding portion (5); and/or wherein said guide pin (2) is configured to be inserted into a fixing housing (105) made in either said bracket (103) or said caliper body (102), wherein said fixing housing (105) is coaxial and opposite to said sliding housing (103), wherein said second pin coupling portion (6) is threaded to make a threaded fit with a threaded portion of said fixing housing;
and/or wherein said first pin coupling portion (4) and said second pin coupling portion (6) form a seamless threaded pin portion.

3. A guide pin (2) according to any one of the preceding claims, wherein said guide pin (2) extends along a pin axis parallel to said axial direction (A-A), wherein said guide pin (2) is axially symmetrical relative to said pin axis and/or is symmetrical relative to a symmetry plane passing through said pin axis;
and/or wherein said guide pin (2) comprises in succession a pin head (9) configured to abut with said caliper body (102) when said second pin coupling portion (6) is fully coupled to either said bracket (103) or said caliper body (102);
and/or wherein said first coupling portion (4) and said second pin sliding portion (6) have substantially the same diameter, wherein said pin sliding portion (5) is tapered relative to said first coupling portion (4);
and/or wherein said pin sliding portion (5) comprises at least one longitudinal groove (8) which extends from a pin tip (26) allowing air to vent from the sliding housing (103) during an assembly operation of the brake caliper (100), preferably said pin sliding portion (5) is a cylindrical pin portion and said at least one groove forms flat surfaces recessed in said cylindrical pin portion, said at least one axial groove (8) preferably comprises three axial grooves (8) or said pin sliding portion (8)
and/or wherein said pin sliding portion (5) has an annular pin housing to receive a damping anti-shock bushing (27), wherein said bushing (27) is made of an elastomeric material and comprises a plurality of axial recesses (30) adapted to retain lubricant to allow the lowfriction sliding of the guide pin (2) in the pin housing (103);
and/or wherein said guide pin (2) is made of steel and/or wherein said guide pin (2) is made in one piece by molding;
and/or wherein said pin head (9) is made in one piece with said first pin coupling portion (4); and/or wherein said guide pin (2) is free from internal threaded holes.

4. A guide (1) for a brake caliper (100) of the floating type of a disc brake, comprising
- a guide pin (2) according to any one of the preceding claims from **1** to **3;**
- a guide sleeve (3) for a brake caliper (101) of the floating type of a disc brake, wherein said brake caliper (100) comprises a caliper body (101) and a bracket (102), wherein said guide sleeve (3) is configured to be arranged between said caliper body (101) and said bracket (102), wherein said guide sleeve (3) comprises a tubular sleeve body (10) configured to at least partially accommodate in a sliding manner the pin sliding portion (5) of said guide pin (2) guided in a sliding manner within the sliding housing (103) formed in either said caliper body (101) or said bracket (102) to allow the relative sliding between said caliper body (101) and said bracket (102) along an axial direction (A-A), wherein said guide sleeve (3) is configured to deform to allow the relative sliding between the caliper body (101) and the bracket (102);
wherein said guide sleeve (3) comprises
- a first sleeve coupling portion (11) configured to connect said guide sleeve (3) to said guide pin (2),
- a sleeve sliding portion (12) configured to internally receive at least one portion of said pin sliding portion (5), wherein said sleeve sliding portion (12) comprises a second sleeve coupling portion (13) configured to be inserted into said sliding housing (103) and couple said guide sleeve (3) to either said caliper body (101) or said bracket (102),
said first sleeve coupling portion (11) is threaded to form a threaded coupling between said guide sleeve (3) and said guide pin (2);
**characterized in that** said guide pin (2) is connectible to said guide sleeve (3) by a threaded coupling.

5. A guide (1) according to claim **4,** wherein
wherein said first pin coupling portion (4) has a first pin diameter (D1), and wherein said first sleeve coupling portion (11) has a first sleeve diameter (D3), wherein said first sleeve diameter (D3) is smaller than said first pin diameter (D1) so that said first sleeve coupling portion (11) is elastically biased against said first pin coupling portion (4) forming a threaded fit as tight as possible between said guide pin (2) and said guide sleeve (3).

6. A guide (1) according to claim **4,** comprising a first sleeve sealing portion (14) which radially and internally protrudes along a radial direction (R-R) perpendicular to said axial direction (A-A) towards said guide pin (2) to seal with a pin sealing portion (7) of said pin comprising a smooth, ridge-free surface, wherein said first sleeve sealing portion (14) is annular.

7. A guide (1) according to claim **6,**
wherein said first sleeve sealing portion (14) comprises a sleeve sealing tooth (15) forming a first gasket integrated into said sleeve body (10), wherein said first gasket is an o-ring.

8. A guide (1) according to claim **4,** wherein said sleeve body (10) extends between a first axial sleeve edge (20) and a second axial sleeve edge (21), wherein said first axial sleeve edge (20) delimits said sleeve body (10) on the opposite side from said second sleeve coupling portion (13), wherein said guide sleeve (3) comprises a second sleeve sealing portion which protrudes in an axial direction (A-A) from said first axial sleeve edge (20) to achieve a seal either with bracket (103) or caliper body (102) to protect said guide pin (2) from corrosion.

9. A guide (1) according to claim **8,** wherein said first sleeve axial edge (20) is an annular edge perpendicular to said axial direction (A-A), wherein said second sleeve sealing portion (18) comprises an annular sleeve sealing lip (19), which protrudes from said first axial sleeve seal edge (20) in axial direction A-A forming a cusp, wherein said second sleeve sealing portion (18) forms a second gasket integrated into said sleeve body (10), wherein said second gasket is a v-ring.

10. A guide (1) according to claim **8,** wherein said second sleeve coupling portion (13) is axially delimited by said second sleeve axial edge (21), wherein said second sleeve coupling portion (13) comprises a sleeve fixing tooth (25) which prevalently extends along said radial direction (R-R) relative to a cylindrical sleeve portion (34) having development parallel to said axial direction (A-A),wherein said second sleeve coupling portion (13) comprises a sleeve fixing lip (22) which extends prevalently along the axial direction (A-A), wherein said sleeve coupling lip (22) is configured to be inserted into an annular housing made on an axially inner surface of said fixing groove (104), to form a tight fit of said second sleeve coupling portion (13) and said bracket (103).

11. A maintenance kit for a brake caliper of the floating type, comprising
- two guide pins (2) according to any one of the claims from **1** to **3,** wherein said two guide pins (2) comprise a main guide pin (2a) and a secondary guide pin (2b),
- two guide sleeves (3) for a brake caliper (101) of the floating type of a disc brake, wherein said brake caliper (100) comprises a caliper body (101) and a bracket (102), wherein each guide sleeve (3) is configured to be arranged between said caliper body (101) and said bracket (102), wherein each guide sleeve (3) comprises a tubular sleeve body (10) configured to at least partially accommodate in a sliding manner the pin sliding portion (5) of said guide pin (2) guided in a sliding manner within the sliding housing (103) formed in either said caliper body (101) or said bracket (102) to allow the relative sliding between said caliper body (101) and said bracket (102) along an axial direction (A-A), wherein each guide sleeve (3) is configured to deform to allow the relative sliding between the caliper body (101) and the bracket (102);
wherein each guide sleeve (3) comprises
- a first sleeve coupling portion (11) configured to connect said guide sleeve (3) to said guide pin (2),
- a sleeve sliding portion (12) configured to internally receive at least one portion of said pin sliding portion (5), wherein said sleeve sliding portion (12) comprises a second sleeve coupling portion (13) configured to be inserted into said sliding housing (103) and couple said guide sleeve (3) to either said caliper body (101) or said bracket (102),
said first sleeve coupling portion (11) is threaded to form a threaded coupling between said guide sleeve (3) and said guide pin (2).

12. A brake caliper (100) comprising
- a caliper body (101), mechanically connected in a sliding manner to a bracket (102), connectible to a vehicle by means of at least one guide (1) according to any one of the claims from **4** to **10.**

13. An assembly method of a brake caliper (100) of the floating type comprising the following steps:
- providing a caliper body (101) and a bracket (102), wherein the caliper body (101) is mechanically connectible in a sliding manner to said bracket (102),
- providing a guide pin (2) according to any one of the claims from **1** to **3,**
- providing a guide sleeve (3) for a brake caliper (101) of the floating type of a disc brake, wherein said brake caliper (100) comprises a caliper body (101) and a bracket (102), wherein said guide sleeve (3) is configured to be arranged between said caliper body (101) and said bracket (102), wherein said guide sleeve (3) comprises a tubular sleeve body (10) configured to at least partially accommodate in a sliding manner the pin sliding portion (5) of said guide pin (2) guided in a sliding manner within the sliding housing (103) formed in either said caliper body (101) or said bracket (102) to allow the relative sliding between said caliper body (101) and said bracket (102) along an axial direction (A-A), wherein said guide sleeve (3) is configured to deform to allow the relative sliding between the caliper body (101) and the bracket (102);
wherein said guide sleeve (3) comprises
- a first sleeve coupling portion (11) configured to connect said guide sleeve (3) to said guide pin (2),
- a sleeve sliding portion (12) configured to internally receive at least one portion of said pin sliding portion (5), wherein said sleeve sliding portion (12) comprises a second sleeve coupling portion (13) configured to be inserted into said sliding housing (103) and couple said guide sleeve (3) to either said caliper body (101) or said bracket (102),
said first sleeve coupling portion (11) is threaded to form a threaded coupling between said guide sleeve (3) and said guide pin (2); **characterized in that** said guide pin (2) is connectible to said guide sleeve (3) by a threaded coupling,
- coupling said second sleeve coupling portion (13) to said sliding housing (103) made in said caliper body (101) or said bracket (102);
- approaching the caliper body (101) to said guide sleeve (3) compressing it,
- inserting said guide pin (2) into a fixing housing (105) made in said caliper body (101) or said bracket (102), in said guide sleeve (3) and said sliding housing (103), wherein said fixing housing (105) is coaxial to said sliding housing (103), possibly lubricating said pin sliding portion (5);
- screwing said guide pin (2) coupling said first pin coupling portion (4) to said first sleeve coupling portion (11) and said second pin coupling portion (4) to said fixing housing (105).

## Patentansprüche

1. Führungsstift (2) für einen Bremssattel (100) des schwebenden Typs einer Scheibenbremse, wobei der Bremssattel (100) einen Bremssattelkörper (101) und eine Halterung (102) umfasst, wobei der Führungsstift (2) dazu eingerichtet ist, zwischen dem Bremssattelkörper (101) und der Halterung (102) angeordnet zu sein, um das relative Gleiten zwischen dem Bremssattelkörper (101) und der Halterung (102) entlang einer axialen Richtung (A-A) zuzulassen, und wobei der Führungsstift (2) dazu eingerichtet ist, mit einer Führungshülse (3) verbunden zu sein und wenigstens teilweise innerhalb der Führungshülse (3) zu gleiten, wobei der Führungsstift (2) umfasst:
- einen ersten Stiftkopplungsabschnitt (4), welcher dazu eingerichtet ist, den Führungsstift (2) mit der Führungshülse (3) zu koppeln;
- einen Stiftgleitabschnitt (5), welcher dazu eingerichtet ist, in einer gleitenden Weise den Führungsstift (2) in ein Gleitgehäuse (103) zu führen, welches entweder in dem Bremssattelkörper (101) oder der Halterung (102) angeordnet ist;
- einen zweiten Stiftkopplungsabschnitt (6), welcher dazu eingerichtet ist, den Führungsstift (2) entweder mit der Halterung (102) oder dem Bremssattelkörper (101) zu koppeln,
wobei der erste Stiftkopplungsabschnitt (4) zwischen dem zweiten Stiftkopplungsabschnitt (6) und dem Stiftgleitabschnitt (5) angeordnet ist, **dadurch gekennzeichnet, dass**
der erste Stiftkopplungsabschnitt (4) ein Gewinde aufweist, um eine Gewindekopplung zwischen dem Führungsstift (2) und der Führungshülse (3) zu bilden,
und wobei der Führungsstift (2) dazu eingerichtet ist, mit der Führungshülse (3) gekoppelt zu sein, wobei vermieden wird, Kerben an dem Führungsstift (2) zu verursachen, um den Führungsstift (2) mit der Führungshülse (3) in einer hinterschnittenen Weise zu verbinden.

2. Führungsstift (2) nach dem vorhergehenden Anspruch, umfassend einen Stiftdichtungsabschnitt (7), welcher dazu eingerichtet ist, fest mit der Führungshülse (3) verbunden zu sein, wobei der Stiftdichtungsabschnitt (7) ein glatter, gratfreier Abschnitt ist, wobei der Stiftdichtungsabschnitt (7) zischen dem ersten Stiftkopplungsabschnitt (4) und dem Stiftgleitabschnitt (5) angeordnet ist; und/oder wobei der Führungsstift (2) dazu eingerichtet ist, in ein Fixierungsgehäuse (105) eingesetzt zu sein, welches entweder in der Halterung (103) oder dem Bremssattelkörper (102) gefertigt ist, wobei das Fixierungsgehäuse (105) koaxial und entgegengesetzt zu dem Gleitgehäuse (103) ist, wobei der zweite Stiftkopplungsabschnitt (6) ein Gewinde aufweist, um eine Gewindepassung mit einem Gewindeabschnitt des Fixierungsgehäuses zu fertigen;
und/oder wobei der erste Stiftkopplungsabschnitt (4) und der zweite Stiftkopplungsabschnitt (6) einen durchgehenden Stiftabschnitt bilden, welcher ein Gewinde aufweist.

3. Führungsstift (2) nach einem der vorhergehenden Ansprüche, wobei der Führungsstift (2) sich entlang einer Stiftachse parallel zu der axialen Richtung (A-A) erstreckt, wobei der Führungsstift (2) axial symmetrisch ist relativ zu der Stiftachse und/oder symmetrisch ist relativ zu einer Symmetrieebene, welche durch die Stiftachse verläuft;
und/oder wobei der Führungsstift (2) darauffolgend einen Stiftkopf (9) umfasst, welcher dazu eingerichtet ist, an dem Bremssattelkörper (102) anzustoßen, wenn der zweite Stiftkopplungsabschnitt (6) vollständig mit entweder der Halterung (103) oder dem Bremssattelkörper (102) gekoppelt ist;
und/oder wobei der erste Kopplungsabschnitt (4) und der zweite Stiftgleitabschnitt (6) im Wesentlichen den gleichen Durchmesser aufweisen, wobei der Stiftgleitabschnitt (5) relativ zu dem ersten Kopplungsabschnitt (4) verjüngt ist;
und/oder wobei der Stiftgleitabschnitt (5) wenigstens eine longitudinale Kerbe (8) umfasst, welche sich von einer Stiftspitze (26) erstreckt, wobei sie zulässt, dass Luft von dem Gleitgehäuse (103) ventiliert während eines Zusammenbauvorgangs des Bremssattels (100), wobei bevorzugt der Stiftgleitabschnitt (5) ein zylindrischer Stiftabschnitt ist und die wenigstens eine Kerbe flache Flächen bildet, welche in dem zylindrischen Stiftabschnitt vertieft sind, wobei bevorzugt die wenigstens eine axiale Kerbe (8) drei axiale Kerben (8) oder den Stiftgleitabschnitt (8) umfasst
und/oder wobei der Stiftgleitabschnitt (5) ein ringförmiges Stiftgehäuse aufweist, um eine dämpfende Anti-Schock-Buchse (27) entgegenzunehmen, wobei die Buchse (27) aus einem elastomeren Material gefertigt ist und eine Mehrzahl von axialen Vertiefungen (30) umfasst, welche dazu angepasst sind, Gleitmittel aufzubewahren, um das Gleiten des Führungsstifts (2) mit geringer Reibung in dem Stiftgehäuse (103) zuzulassen;
und/oder wobei der Führungsstift (2) aus Stahl gefertigt ist und/oder wobei der Führungsstift (2) als ein Stück gefertigt ist durch Formherstellung;
und/oder wobei der Stiftkopf (9) als ein Stück mit dem ersten Stiftkopplungsabschnitt (4) gefertigt ist; und/oder wobei der Führungsstift (2) frei von internen Löchern mit Gewinden ist.

4. Führung (1) für einen Bremssattel (100) des schwebenden Typs einer Scheibenbremse, umfassend
- einen Führungsstift (2) nach einem der vorhergehenden Ansprüche von 1 bis 3;
- eine Führungshülse (3) für einen Bremssattel (101) des schwebenden Typs einer Scheibenbremse, wobei der Bremssattel (100) einen Bremssattelkörper (101) und eine Halterung (102) umfasst, wobei die Führungshülse (3) dazu eingerichtet ist, zwischen dem Bremssattelkörper (101) und der Halterung (102) angeordnet zu sein, wobei die Führungshülse (3) einen röhrenförmigen Hülsenkörper (10) umfasst, welcher dazu eingerichtet ist, den Stiftgleitabschnitt (5) des Führungsstifts (2), welcher in einer gleitenden Weise innerhalb des Gleitgehäuses (103) geführt ist, welches entweder in dem Bremssattelkörper (101) oder der Halterung (102) gebildet ist, in einer gleitenden Weise wenigstens teilweise zu beherbergen, um das relative Gleiten zwischen dem Bremssattelkörper (101) und der Halterung (102) entlang einer axialen Richtung (A-A) zuzulassen, wobei die Führungshülse (3) dazu eingerichtet ist, zu deformieren, um das relative Gleiten zwischen dem Bremssattelkörper (101) und der Halterung (102) zuzulassen;
wobei die Führungshülse (3) umfasst
- einen ersten Hülsenkopplungsabschnitt (11), welcher dazu eingerichtet ist, die Führungshülse (3) mit dem Führungsstift (2) zu verbinden,
- einen Hülsengleitabschnitt (12), welcher dazu eingerichtet ist, intern wenigstens einen Abschnitt des Stiftgleitabschnitts (5) aufzunehmen, wobei der Hülsengleitabschnitt (12) einen zweiten Hülsenkopplungsabschnitt (13) umfasst, welcher dazu eingerichtet ist, in das Gleitgehäuse (103) eingesetzt zu sein und die Führungshülse (3) entweder mit dem Bremssattelkörper (101) oder der Halterung (102) zu koppeln,
wobei der erste Hülsenkopplungsabschnitt (11) ein Gewinde aufweist, um eine Gewindekopplung zwischen der Führungshülse (3) und dem Führungsstift (2) zu bilden;
**dadurch gekennzeichnet, dass** der Führungsstift (2) mit der Führungshülse (3) durch eine Gewindekopplung verbindbar ist.

5. Führung (1) nach Anspruch 4, wobei
wobei der erste Stiftkopplungsabschnitt (4) einen ersten Stiftdurchmesser (D1) aufweist, und wobei der erste Hülsenkopplungsabschnitt (11) einen ersten Hülsendurchmesser (D3) aufweist, wobei der erste Hülsendurchmesser (D3) kleiner ist als der erste Stiftdurchmesser (D1), sodass der erste Hülsenkopplungsabschnitt (11) elastisch gegen den ersten Stiftkopplungsabschnitt (4) vorgespannt ist, wobei er eine Gewindepassung bildet, welche so fest wie möglich zwischen dem Führungsstift (2) und der Führungshülse (3) ist.

6. Führung (1) nach Anspruch 4, umfassend einen ersten
Hülsendichtungsabschnitt (14), welcher radial und intern entlang einer radialen Richtung (R-R) senkrecht zu der axialen Richtung (A-A) zu dem Führungsstift (2) hin hervorsteht, um mit einem Stiftdichtungsabschnitt (7) des Stifts abzudichten, wobei er eine glatte, gratfreie Fläche umfasst, wobei der erste Hülsendichtungsabschnitt (14) ringförmig ist.

7. Führung (1) nach Anspruch 6,
wobei der erste Hülsendichtungsabschnitt (14) einen Hülsendichtungszinken (15) umfasst, welcher eine erste Dichtung bildet, welche in den Hülsenkörper (10) integriert ist, wobei die erste Dichtung ein O-Ring ist.

8. Führung (1) nach Anspruch 4, wobei der Hülsenkörper (10) sich zwischen einem ersten axialen Hülsenrand (20) und einem zweiten axialen Hülsenrand (21) erstreckt, wobei der erste axiale Hülsenrand (20) den Hülsenkörper (10) an der entgegengesetzten Seite von dem zweiten Hülsenkopplungsabschnitt (13) begrenzt, wobei die Führungshülse (3) einen zweiten Hülsendichtungsabschnitt umfasst, welcher in einer axialen Richtung (A-A) von dem ersten axialen Hülsenrand (20) hervorsteht, um eine Dichtung entweder mit Halterung (103) oder Bremssattelkörper (102) zu erwirken, um den Führungsstift (2) vor Korrosion zu schützen.

9. Führung (1) nach Anspruch 8, wobei der erste axiale Rand der Hülse (20) ein ringförmiger Rand senkrecht zu der axialen Richtung (A-A) ist, wobei der zweite Hülsendichtungsabschnitt (18) eine ringförmige Hülsendichtlippe (19) umfasst, welche von dem ersten axialen Hülsendichtrand (20) in axialer Richtung A-A hervorsteht, wobei sie eine Spitze bildet, wobei der zweite Hülsendichtungsabschnitt (18) eine zweite Dichtung bildet, welche in den Hülsenkörper (10) integriert ist, wobei die zweite Dichtung ein V-Ring ist.

10. Führung (1) nach Anspruch 8, wobei der zweite Hülsenkopplungsabschnitt (13) axial durch den zweiten axialen Rand der Hülse (21) begrenzt ist, wobei der zweite Hülsenkopplungsabschnitt (13) einen Hülsenfixierungszinken (25) umfasst, welcher sich vorwiegend entlang der radialen Richtung (R-R) relativ zu einem zylindrischen Hülsenabschnitt (34) erstreckt, welcher sich parallel zu der axialen Richtung (A-A) erstreckt, wobei der zweite Hülsenkopplungsabschnitt (13) eine Hülsenfixierungslippe (22) umfasst, welche sich vorwiegen entlang der axialen Richtung (A-A) erstreckt, wobei die Hülsenkopplungslippe (22) dazu eingerichtet ist, in ein ringförmiges Gehäuse eingesetzt zu sein, welches an einer axial inneren Fläche der Fixierungskerbe (104) gefertigt ist, um eine feste Passung des zweiten Hülsenkopplungsabschnitts (13) und der Halterung (103) zu bilden.

11. Wartungsbaukasten für einen Bremssattel des schwebenden Typs, umfassend
- zwei Führungsstifte (2) nach einem der Ansprüche von 1 bis 3, wobei die zwei Führungsstifte (2) einen Hauptführungsstift (2a) und einen sekundären Führungsstift (2b) umfassen,
- zwei Führungshülsen (3) für einen Bremssattel (101) des schwebenden Typs einer Scheibenbremse, wobei der Bremssattel (100) einen Bremssattelkörper (101) und eine Halterung (102) umfasst, wobei jede Führungshülse (3) dazu eingerichtet ist, zwischen dem Bremssattelkörper (101) und der Halterung (102) angeordnet zu sein, wobei jede Führungshülse (3) einen röhrenförmigen Hülsenkörper (10) umfasst, welcher dazu eingerichtet ist, den Stiftgleitabschnitt (5) des Führungsstifts (2), welcher in einer gleitenden Weise innerhalb des Gleitgehäuses (103) geführt ist, welches entweder in dem Bremssattelkörper (101) oder der Halterung (102) gebildet ist, in einer gleitenden Weise wenigstens teilweise zu beherbergen, um das relative Gleiten zwischen dem Bremssattelkörper (101) und der Halterung (102) entlang einer axialen Richtung (A-A) zuzulassen, wobei jede Führungshülse (3) dazu eingerichtet ist, zu deformieren, um das relative gleiten zwischen dem Bremssattelkörper (101) und der Halterung (102) zuzulassen;
wobei jede Führungshülse (3) umfasst
- einen ersten Hülsenkopplungsabschnitt (11), welcher dazu eingerichtet ist, die Führungshülse (3) mit dem Führungsstift (2) zu verbinden,
- einen Hülsengleitabschnitt (12), welcher dazu eingerichtet ist, intern wenigstens einen Abschnitt des Stiftgleitabschnitts (5) aufzunehmen, wobei der Hülsengleitabschnitt (12) einen zweiten Hülsenkopplungsabschnitt (13) umfasst, welcher dazu eingerichtet ist, in das Gleitgehäuse (103) eingesetzt zu sein und die Führungshülse (3) entweder mit dem Bremssattelkörper (101) oder der Halterung (102) zu koppeln,
wobei der erste Hülsenkopplungsabschnitt (11) ein Gewinde aufweist, um eine Gewindekopplung zwischen der Führungshülse (3) und dem Führungsstift (2) zu bilden.

12. Bremssattel (100) umfassend
- einen Bremssattelkörper (101), welcher mechanisch in einer gleitenden Weise mit der Halterung (102) verbunden ist, wobei er mit einem Fahrzeug verbindbar ist mittels wenigstens einer Führung (1) nach einem der Ansprüche von 4 bis 10.

13. Fertigungsverfahren eines Bremssattels (100) des schwebenden Typs, umfassend die folgenden Schritte:
- Bereitstellen eines Bremssattelkörpers (101) und einer Halterung (102), wobei der Bremssattelkörper (101) mechanisch in einer gleitenden Weise mit der Halterung (102) verbindbar ist,
- Bereitstellen eines Führungsstifts (2) nach einem der Ansprüche von 1 bis 3,
- Bereitstellen einer Führungshülse (3) für einen Bremssattel (101) des schwebenden Typs einer Scheibenbremse, wobei der Bremssattel (100) einen Bremssattelkörper (101) und eine Halterung (102) umfasst, wobei die Führungshülse (3) dazu eingerichtet ist, zwischen dem Bremssattelkörper (101) und der Halterung (102) angeordnet zu sein, wobei die Führungshülse (3) einen röhrenförmigen Hülsenkörper (10) umfasst, welcher dazu eingerichtet ist, den Stiftgleitabschnitt (5) des Führungsstifts (2), welcher in einer gleitenden Weise innerhalb des Gleitgehäuses (103) geführt ist, welches entweder in dem Bremssattelkörper (101) oder der Halterung (102) gebildet ist, in einer gleitenden Weise wenigstens teilweise zu beherbergen, um das relative Gleiten zwischen dem Bremssattelkörper (101) und der Halterung (102) entlang einer axialen Richtung (A-A) zuzulassen, wobei die Führungshülse (3) dazu eingerichtet ist, zu deformieren, um das relative gleiten zwischen dem Bremssattelkörper (101) und der Halterung (102) zuzulassen;
wobei die Führungshülse (3) umfasst
- einen ersten Hülsenkopplungsabschnitt (11), welcher dazu eingerichtet ist, die Führungshülse (3) mit dem Führungsstift (2) zu verbinden,
- einen Hülsengleitabschnitt (12), welcher dazu eingerichtet ist, intern wenigstens einen Abschnitt des Stiftgleitabschnitts (5) aufzunehmen, wobei der Hülsengleitabschnitt (12) einen zweiten Hülsenkopplungsabschnitt (13) umfasst, welcher dazu eingerichtet ist, in das Gleitgehäuse (103) eingesetzt zu sein und die Führungshülse (3) entweder mit dem Bremssattelkörper (101) oder der Halterung (102) zu koppeln,
wobei der erste Hülsenkopplungsabschnitt (11) ein Gewinde aufweist, um eine Gewindekopplung zwischen der Führungshülse (3) und dem Führungsstift (2) zu bilden;
**dadurch gekennzeichnet, dass** der Führungsstift (2) mit der Führungshülse (3) mittels Gewindekopplung verbindbar ist,
- Koppeln des zweiten Hülsenkopplungsabschnitts (13) mit dem Gleitgehäuse (103), welches in dem Bremssattelkörper (101) oder der Halterung (102) gefertigt ist;
- Annähern des Bremssattelkörpers (101) an die Führungshülse (3), wobei sie komprimiert wird,
- Einsetzen des Führungsstifts (2) in ein Fixierungsgehäuse (105), welches in dem Bremssattelkörper (101) oder der Halterung (102) gefertigt ist, in der Führungshülse (3) und dem Gleitgehäuse (103), wobei das Fixierungsgehäuse (105) koaxial zu dem Gleitgehäuse (103) ist, möglicherweise Schmieren des Stiftgleitabschnitts (5);
- Schrauben des Führungsstifts (2), wobei der erste Stiftkopplungsabschnitt (4) mit dem ersten Hülsenkopplungsabschnitt (11) und der zweite Stiftkopplungsabschnitt (4) mit dem Fixierungsgehäuse (105) gekoppelt werden.

## Revendications

1. Goupille de guidage (2) pour un étrier de frein (100) du type flottant d'un frein à disque, dans laquelle ledit étrier de frein (100) comprend un corps d'étrier (101) et un support (102), dans laquelle ladite goupille de guidage (2) est configurée pour être agencée entre ledit corps d'étrier (101) et ledit support (102) pour permettre le coulissement relatif entre ledit corps d'étrier (101) et ledit support (102) selon une direction axiale (A-A), et dans laquelle ladite goupille de guidage (2) est configurée pour être reliée à un manchon de guidage (3) et coulisser au moins partiellement à l'intérieur dudit manchon de guidage (3),
dans laquelle ladite goupille de guidage (2) comprend :
- une première partie d'accouplement de goupille (4) configurée pour accoupler ladite goupille de guidage (2) audit manchon de guidage (3) ;
- une partie coulissante de goupille (5) configurée pour guider de manière coulissante ladite goupille de guidage (2) dans un logement coulissant (103) obtenu dans ledit corps d'étrier (101) ou ledit support (102) ;
- une deuxième partie d'accouplement de goupille (6) configurée pour accoupler ladite goupille de guidage (2) audit support (102) ou audit corps d'étrier (101),
dans laquelle ladite première partie d'accouplement de goupille (4) est agencée entre ladite deuxième partie d'accouplement de goupille (6) et ladite partie coulissante de goupille (5),
**caractérisée en ce que**
ladite première partie d'accouplement de goupille (4) est filetée pour former un accouplement fileté entre ladite goupille de guidage (2) et ledit manchon de guidage (3),
et dans laquelle ladite goupille de guidage (2) est configurée pour être accouplée audit manchon de guidage (3) en évitant de réaliser des rainures sur ladite goupille de guidage (2) pour relier ladite goupille de guidage (2) audit manchon de guidage (3) en contre-dépouille.

2. Goupille de guidage (2) selon la revendication précédente, comprenant une partie d'étanchéité de goupille (7) configurée pour être reliée étroitement audit manchon de guidage (3), dans laquelle ladite partie d'étanchéité de goupille (7) est une partie lisse sans arête, dans laquelle ladite partie d'étanchéité de goupille (7) est agencée entre ladite première partie d'accouplement de goupille (4) et ladite partie coulissante de goupille (5) ;
et/ou dans laquelle ladite goupille de guidage (2) est configurée pour être insérée dans un logement de fixation (105) réalisé dans ledit support (103) ou ledit corps d'étrier (102), dans laquelle ledit logement de fixation (105) est coaxial et opposé audit logement coulissant (103), dans laquelle ladite deuxième partie d'accouplement de goupille (6) est filetée pour réaliser un ajustement fileté avec une partie filetée dudit logement de fixation ;
et/ou dans laquelle ladite première partie d'accouplement de goupille (4) et ladite deuxième partie d'accouplement de goupille (6) forment une partie de goupille filetée sans soudure.

3. Goupille de guidage (2) selon l'une quelconque des revendications précédentes, dans laquelle ladite goupille de guidage (2) s'étend le long d'un axe de goupille parallèle à ladite direction axiale (A-A), dans laquelle ladite goupille de guidage (2) est symétrique axialement par rapport audit axe de goupille et/ou est symétrique par rapport à un plan de symétrie traversant ledit axe de goupille ;
et/ou dans laquelle ladite goupille de guidage (2) comprend successivement une tête de goupille (9) configurée pour venir en butée contre ledit corps d'étrier (102) lorsque ladite deuxième partie d'accouplement de goupille (6) est entièrement accouplée audit support (103) ou audit corps d'étrier (102) ;
et/ou dans laquelle ladite première partie d'accouplement (4) et ladite deuxième partie coulissante de goupille (6) ont sensiblement le même diamètre, dans laquelle ladite partie coulissante de goupille (5) est effilée par rapport à ladite première partie d'accouplement (4) ;
et/ou dans laquelle ladite partie coulissante de goupille (5) comprend au moins une rainure longitudinale (8) s'étendant à partir d'une pointe de goupille (26) permettant à l'air d'être évacué du logement coulissant (103) lors d'une opération d'assemblage de l'étrier de frein (100), de préférence ladite partie coulissante de goupille (5) est une partie de goupille cylindrique et ladite au moins une rainure forme des surfaces planes encastrées dans ladite partie de goupille cylindrique, ladite au moins une rainure axiale (8) comprend de préférence trois rainures axiales (8) ou ladite partie coulissante de goupille (8)
et/ou dans laquelle ladite partie coulissante de goupille (5) présente un logement de goupille annulaire pour recevoir une douille antichoc d'amortissement (27), dans laquelle ladite douille (27) est constituée d'un matériau élastomère et comprend une pluralité d'évidements axiaux (30) adaptés pour retenir du lubrifiant afin de permettre le coulissement à faible frottement de la goupille de guidage (2) dans le logement de goupille (103) ;
et/ou dans laquelle ladite goupille de guidage (2) est réalisée en acier et/ou dans laquelle ladite goupille de guidage (2) est réalisée en une seule pièce par moulage ;
et/ou dans laquelle ladite tête de goupille (9) est réalisée en une seule pièce avec ladite première partie d'accouplement de goupille (4) ; et/ou dans laquelle ladite goupille de guidage (2) est dépourvue de trous filetés internes.

4. Guide (1) pour étrier de frein (100) du type flottant d'un frein à disque, comprenant
- une goupille de guidage (2) selon l'une quelconque des revendications **1** à **3** précédentes ;
- un manchon de guidage (3) pour un étrier de frein (101) du type flottant d'un frein à disque, dans lequel ledit étrier de frein (100) comprend un corps d'étrier (101) et un support (102), dans lequel ledit manchon de guidage (3) est configuré pour être agencé entre ledit corps d'étrier (101) et ledit support (102), dans lequel ledit manchon de guidage (3) comprend un corps de manchon tubulaire (10) configuré pour accueillir au moins partiellement de manière coulissante la partie coulissante de goupille (5) de ladite goupille de guidage (2) guidée de manière coulissante à l'intérieur du logement coulissant (103) formé dans ledit corps d'étrier (101) ou ledit support (102) pour permettre le coulissement relatif entre ledit corps d'étrier (101) et ledit support (102) le long d'une direction axiale (A-A), dans lequel ledit manchon de guidage (3) est configuré pour se déformer afin de permettre le coulissement relatif entre le corps d'étrier (101) et le support (102) ;
dans lequel ledit manchon de guidage (3) comprend
- une première partie d'accouplement de manchon (11) configurée pour relier ledit manchon de guidage (3) à ladite goupille de guidage (2),
- une partie coulissante de manchon (12) configurée pour recevoir en son sein au moins une partie de ladite partie coulissante de goupille (5), dans lequel ladite partie coulissante de manchon (12) comprend une deuxième partie d'accouplement de manchon (13) configurée pour être insérée dans ledit logement coulissant (103) et accoupler ledit manchon de guidage (3) audit corps d'étrier (101) ou audit support (102),
ladite première partie d'accouplement de manchon (11) est filetée pour former un accouplement fileté entre ledit manchon de guidage (3) et ladite goupille de guidage (2) ;
**caractérisé en ce que** ladite goupille de guidage (2) peut être reliée audit manchon de guidage (3) par un accouplement fileté.

5. Guide (1) selon la revendication 4, dans lequel
dans lequel ladite première partie d'accouplement de goupille (4) a un premier diamètre de goupille (D1), et dans lequel ladite première partie d'accouplement de manchon (11) a un premier diamètre de manchon (D3), dans lequel ledit premier diamètre de manchon (D3) est plus petit que ledit premier diamètre de goupille (D1) de sorte que ladite première partie d'accouplement de manchon (11) soit sollicitée élastiquement contre ladite première partie d'accouplement de goupille (4), formant un ajustement fileté aussi serré que possible entre ladite goupille de guidage (2) et ledit manchon de guidage (3).

6. Guide (1) selon la revendication 4, comprenant une première partie d'étanchéité de manchon (14) qui fait saillie radialement et à l'intérieur le long d'une direction radiale (R-R) perpendiculaire à ladite direction axiale (A-A) vers ladite goupille de guidage (2) pour assurer l'étanchéité avec une partie d'étanchéité de goupille (7) de ladite goupille comprenant une surface lisse sans arête, dans lequel ladite première partie d'étanchéité de manchon (14) est annulaire.

7. Guide (1) selon la revendication 6,
dans lequel ladite première partie d'étanchéité de manchon (14) comprend une dent d'étanchéité de manchon (15) formant un premier joint d'étanchéité intégré dans ledit corps de manchon (10), dans lequel ledit premier joint d'étanchéité est un joint torique.

8. Guide (1) selon la revendication 4, dans lequel ledit corps de manchon (10) s'étend entre un premier bord de manchon axial (20) et un deuxième bord de manchon axial (21), dans lequel ledit premier bord de manchon axial (20) délimite ledit corps de manchon (10) sur le côté opposé à ladite deuxième partie d'accouplement de manchon (13), dans lequel ledit manchon de guidage (3) comprend une deuxième partie d'étanchéité de manchon qui fait saillie dans une direction axiale (A-A) dudit premier bord de manchon axial (20) pour assurer une étanchéité avec le support (103) ou le corps d'étrier (102) afin de protéger ladite goupille de guidage (2) contre la corrosion.

9. Guide (1) selon la revendication 8, dans lequel ledit premier bord axial de manchon (20) est un bord annulaire perpendiculaire à ladite direction axiale (A-A), dans lequel ladite deuxième partie d'étanchéité de manchon (18) comprend une lèvre d'étanchéité de manchon annulaire (19), qui fait saillie à partir dudit premier bord d'étanchéité de manchon axial (20) dans la direction axiale A-A formant une pointe, dans lequel ladite deuxième partie d'étanchéité de manchon (18) forme un deuxième joint d'étanchéité intégré dans ledit corps de manchon (10), dans lequel ledit deuxième joint d'étanchéité est un joint en V.

10. Guide (1) selon la revendication 8, dans lequel ladite deuxième partie d'accouplement de manchon (13) est délimitée axialement par ledit deuxième bord axial de manchon (21), dans lequel ladite deuxième partie d'accouplement de manchon (13) comprend une dent de fixation de manchon (25) qui s'étend principalement le long de ladite direction radiale (R-R) par rapport à une partie de manchon cylindrique (34) ayant un développement parallèle à ladite direction axiale (A-A), dans lequel ladite deuxième partie d'accouplement de manchon (13) comprend une lèvre de fixation de manchon (22) qui s'étend principalement le long de la direction axiale (A-A), dans lequel ladite lèvre d'accouplement de manchon (22) est configurée pour être insérée dans un logement annulaire réalisé sur une surface axialement intérieure de ladite rainure de fixation (104), pour former un ajustement serré de ladite deuxième partie d'accouplement de manchon (13) et dudit support (103).

11. Kit d'entretien pour un étrier de frein du type flottant, comprenant
- deux goupilles de guidage (2) selon l'une quelconque des revendications 1 à 3, dans lequel lesdites deux goupilles de guidage (2) comprennent une goupille de guidage principale (2a) et une goupille de guidage secondaire (2b),
- deux manchons de guidage (3) pour un étrier de frein (101) du type flottant d'un frein à disque, dans lequel ledit étrier de frein (100) comprend un corps d'étrier (101) et un support (102), dans lequel chaque manchon de guidage (3) est configuré pour être agencé entre ledit corps d'étrier (101) et ledit support (102), dans lequel chaque manchon de guidage (3) comprend un corps de manchon tubulaire (10) configuré pour accueillir au moins partiellement de manière coulissante la partie coulissante de goupille (5) de ladite goupille de guidage (2) guidée de manière coulissante à l'intérieur du logement coulissant (103) formé dans ledit corps d'étrier (101) ou ledit support (102) pour permettre le coulissement relatif entre ledit corps d'étrier (101) et ledit support (102) le long d'une direction axiale (A-A), dans lequel chaque manchon de guidage (3) est configuré pour se déformer pour permettre le coulissement relatif entre le corps d'étrier (101) et le support (102) ;
dans lequel chaque manchon de guidage (3) comprend
- une première partie d'accouplement de manchon (11) configurée pour relier ledit manchon de guidage (3) à ladite goupille de guidage (2),
- une partie coulissante de manchon (12) configurée pour recevoir en son sein au moins une partie de ladite partie coulissante de goupille (5), dans lequel ladite partie coulissante de manchon (12) comprend une deuxième partie d'accouplement de manchon (13) configurée pour être insérée dans ledit logement coulissant (103) et accoupler ledit manchon de guidage (3) audit corps d'étrier (101) ou audit support (102),
ladite première partie d'accouplement de manchon (11) est filetée pour former un accouplement fileté entre ledit manchon de guidage (3) et ladite goupille de guidage (2).

12. Étrier de frein (100) comprenant
- un corps d'étrier (101), relié mécaniquement de manière coulissante à un support (102), pouvant être relié à un véhicule au moyen d'au moins un guide (1) selon l'une quelconque des revendications **4** à **10.**

13. Procédé d'assemblage d'un étrier de frein (100) du type flottant comprenant les étapes suivantes :
- la fourniture d'un corps d'étrier (101) et d'un support (102), dans lequel le corps d'étrier (101) peut être relié mécaniquement de manière coulissante audit support (102),
- la fourniture d'une goupille de guidage (2) selon l'une quelconque des revendications **1** à **3,**
- la fourniture d'un manchon de guidage (3) pour un étrier de frein (101) du type flottant d'un frein à disque, dans lequel ledit étrier de frein (100) comprend un corps d'étrier (101) et un support (102), dans lequel ledit manchon de guidage (3) est configuré pour être agencé entre ledit corps d'étrier (101) et ledit support (102), dans lequel ledit manchon de guidage (3) comprend un corps de manchon tubulaire (10) configuré pour accueillir au moins partiellement de manière coulissante la partie coulissante de goupille (5) de ladite goupille de guidage (2) guidée de manière coulissante à l'intérieur du logement coulissant (103) formé dans ledit corps d'étrier (101) ou ledit support (102) pour permettre le coulissement relatif entre ledit corps d'étrier (101) et ledit support (102) le long d'une direction axiale (A-A), dans lequel ledit manchon de guidage (3) est configuré pour se déformer afin de permettre le coulissement relatif entre le corps d'étrier (101) et le support (102) ;
dans lequel ledit manchon de guidage (3) comprend
- une première partie d'accouplement de manchon (11) configurée pour relier ledit manchon de guidage (3) à ladite goupille de guidage (2),
- une partie coulissante de manchon (12) configurée pour recevoir en son sein au moins une partie de ladite partie coulissante de goupille (5), dans lequel ladite partie coulissante de manchon (12) comprend une deuxième partie d'accouplement de manchon (13) configurée pour être insérée dans ledit logement coulissant (103) et accoupler ledit manchon de guidage (3) audit corps d'étrier (101) ou audit support (102),
ladite première partie d'accouplement de manchon (11) est filetée pour former un accouplement fileté entre ledit manchon de guidage (3) et ladite goupille de guidage (2) ;
**caractérisé en ce que** ladite goupille de guidage (2) peut être reliée audit manchon de guidage (3) par un accouplement fileté,
- l'accouplement de ladite deuxième partie d'accouplement de manchon (13) audit logement coulissant (103) réalisé dans ledit corps d'étrier (101) ou ledit support (102) ;
- le rapprochement du corps d'étrier (101) dudit manchon de guidage (3) en le comprimant,
- l'insertion de ladite goupille de guidage (2) dans un logement de fixation (105) réalisé dans ledit corps d'étrier (101) ou ledit support (102), dans ledit manchon de guidage (3) et ledit logement coulissant (103), dans lequel ledit logement de fixation (105) est coaxial audit logement coulissant (103), lubrifiant éventuellement ladite partie coulissante de goupille (5) ;
- le vissage de ladite goupille de guidage (2), accouplant ladite première partie d'accouplement de goupille (4) à ladite première partie d'accouplement de manchon (11) et ladite deuxième partie d'accouplement de goupille (4) audit logement de fixation (105).
